# EUROPEAN PATENT SPECIFICATION

(11) **EP 3 422 879 B1**
(45) Date of publication and mention of the grant of the patent: **29.04.2020**
(21) Application number: 17707583.5
(22) Date of filing: 02.03.2017
(51) Int. Cl.: A24F 47/00

(54) **AN AEROSOL-GENERATING DEVICE COMPRISING A FEEDBACK DEVICE**
AEROSOLERZEUGUNGSVORRICHTUNG MIT EINER RÜCKMELDUNGSVORRICHTUNG
DISPOSITIF DE GÉNÉRATION D'AÉROSOL COMPRENANT UN DISPOSITIF DE RÉTROACTION

(30) Priority: 02.03.2016 EP 16158320
(43) Date of publication of application: 09.01.2019
(73) Proprietor: Philip Morris Products S.A., 2000 Neuchâtel (CH)
(72) Inventor: BERNAUER, Dominique, 2000 Neuchâtel (CH)
(74) Representative: Dowling, Ian
(86) International application number: PCT/EP2017/054955
(87) International publication number: WO 2017/149093

(56) References cited:
- WO-A1-2015/177253
- WO-A1-2016/009202
- US-A1- 2009 283 103
- US-A1- 2015 020 825

## Description

The present invention relates to an aerosol-generating device comprising a haptic feedback device and aerosol-generating systems comprising the aerosol-generating device. The invention finds particular application as an electrically operated smoking device.

One type of aerosol-generating system is an electrically operated smoking system. Known handheld electrically operated smoking systems typically comprise an aerosol-generating device comprising a battery, control electronics and an electric heater for heating an aerosol-generating article designed specifically for use with the aerosol-generating device. In some examples, the aerosol-generating article comprises an aerosol-generating substrate, such as a tobacco rod or a tobacco plug, and the heater contained within the aerosol-generating device is inserted into or around the aerosol-generating substrate when the aerosol-generating article is inserted into the aerosol-generating device. In an alternative electrically operated smoking system, the aerosol-generating article may comprise a capsule containing an aerosol-generating substrate, such as loose tobacco.

US 2015/020825 A1 describes an electronic smoking article comprising a haptic feedback component. The haptic feedback component may comprise a vibration transducer.

Typically, it is desirable to provide an aerosol-generating device with a feedback device for providing feedback to a user. For example, an aerosol-generating device may comprise a feedback device to indicate to a user the start and finish of a heating cycle. It would be desirable to provide an aerosol-generating device having an improved feedback device when compared with known aerosol-generating devices.

According to a first aspect of the present invention there is provided an aerosol-generating device comprising an electric heater for heating an aerosol-forming substrate, at least one power supply, a haptic feedback device, and a controller. The haptic feedback device comprises a first electrical coil, a second electrical coil and a magnet configured for movement within the first and second electrical coils. The controller is configured to control a supply of electrical energy from the at least one power supply to the electric heater and the haptic feedback device, wherein the controller is configured to alternate the supply of electrical energy from the at least one power supply to the first electrical coil and the second electrical coil to induce a reciprocating movement of the magnet within the first and second electrical coils.

Each time electrical energy is supplied to each of the first and second electrical coils, a magnetic field is generated, the magnetic field interacting with the magnet. Alternating the supply of electrical energy so that the first and second electrical coils are alternately energised alternates the generated magnetic field between the first and second electrical coils. Alternating the generated magnetic field between the first and second electrical coils results in the reciprocating movement of the magnet within the first and second electrical coils when the aerosol-generating device is configured so that the magnetic field generated by the first electrical coil is opposed to the magnetic field generated by the second electrical coil.

Advantageously, the haptic feedback device of aerosol-generating devices according to the present invention provides a number of advantages over known haptic feedback devices used in known aerosol-generating articles. For example, a number of known aerosol-generating devices use haptic feedback devices comprising eccentric rotating mass motors in which a non-symmetric mass is driven by a brushed direct current (DC) motor. Over time, the electro-mechanical coupling provided by the brushes in eccentric rotating mass motors may fail. The haptic feedback device of aerosol-generating devices according to the present invention overcomes such problems by eliminating the need for electro-mechanical commutation.

A number of alternative known aerosol-generating devices use haptic feedback devices comprising linear resonant actuators in which an alternating current (AC) excites an electromagnetic coil, which in turn drives a magnetic mass mounted on a spring. Over time, the spring may fail. The haptic feedback device of aerosol-generating devices according to the present invention overcomes such problems by eliminating the need for such mechanical components. That is, the magnet may be configured to reciprocate freely within the first and second electrical coils without the need for a spring to provide such a reciprocating motion.

The requirement of AC to drive linear resonant actuators requires either an AC power supply, or a DC power supply in combination with an inverter, both of which increase the complexity of known aerosol-generating devices comprising linear resonant actuator feedback devices. The haptic feedback device of aerosol-generating devices according to the present invention overcomes such problems, as the haptic feedback device according to the present invention can implemented using only a DC power supply that is alternated between the first and second electrical coils.

Linear resonant actuators function by driving the electromagnetic coil with an AC power supply operating at a frequency matched to the resonant frequency of the magnet and spring combination. Therefore, known aerosol-generating devices comprising linear resonant actuator feedback devices are configured to operate the linear resonant actuator at a single frequency only. The haptic feedback device of aerosol-generating devices according to the present invention overcomes such problems, as the haptic feedback device according to the present invention does not rely on a mechanical resonance to create a haptic feedback effect. As such, the haptic feedback device according to the present invention can be operated at a wider range of frequencies.

Preferably, each of the first electrical coil and the second electrical coil is formed from a non-magnetic electrical conductor. Forming each of the first electrical coil and the second electrical coil from a non-magnetic electrical conductor may facilitate movement of the magnet within the first electrical coil and the second electrical coil by eliminating any magnetic interaction between the magnet and the material forming each of the first electrical coil and the second electrical coil. Preferably, each of the first electrical coil and the second electrical coil is formed from copper.

The first electrical coil may comprise a first electrical winding and the second electrical coil may comprises a second electrical winding separate from the first electrical winding.

The haptic feedback device may further comprise a first electrical connection at a first end of the first electrical winding, a second electrical connection at a second end of the first electrical winding, a third electrical connection at a second end of the second electrical winding, and a fourth electrical connection at a first end of the second electrical winding. Providing electrical connections at each end of the first and second electrical windings facilitates electrical connection of the haptic feedback device to other electrical circuits within the aerosol-generating device.

Preferably, the second electrical connection and the fourth electrical connection are connected to each other by a common electrical connection. That is, the haptic feedback device preferably comprises a common electrical connection connected to the second end of the first electrical winding and the first end of the second electrical winding. Providing a common electrical connection may simplify the electrical connection of the haptic feedback device to other electrical circuits within the aerosol-generating device.

The haptic feedback device may comprise a common electrical winding having a first end and a second end, wherein the first electrical coil comprises a first portion of the common electrical winding extending between the first end and an intermediate part of the common electrical winding, and wherein the second electrical coil comprises a second portion of the common electrical winding extending between the intermediate part and the second end of the common electrical winding. Forming the first and second electrical coils from a common electrical winding may simplify the manufacture of the haptic feedback device.

The haptic feedback device may further comprise a first electrical connection at the first end of the common electrical winding, a common electrical connection at the intermediate part of the common electrical winding, and a third electrical connection at the second end of the common electrical winding. Providing a first, a common and a third electrical connection may facilitate electrical connection of the haptic feedback device to other electrical circuits within the aerosol-generating device. Providing a common electrical connection that is common to both of the first and second electrical coils may simplify the electrical connection of the haptic feedback device to other electrical circuits within the aerosol-generating device.

The at least one power supply preferably comprises a DC power supply. As discussed above, using a DC power supply may advantageously simplify the construction and the operation of the aerosol-generating device. Preferably, the controller is configured to alternate the supply of electrical energy from the DC power supply between the first electrical coil and the second electrical coil to induce the reciprocating movement of the magnet within the first and second electrical coils.

The DC power supply preferably comprises a first terminal and a second terminal. In those embodiments described herein in which the haptic feedback device comprises a first electrical connection, a common electrical connection and a third electrical connection, preferably the device is configured to provide an electrical connection between the first terminal and the common electrical connection. Providing an electrical connection between the first terminal and the common electrical connection may simplify the construction and the operation of the aerosol-generating device. For example, the first terminal of the DC power supply may remain connected to the common electrical connection while the controller alternates the supply of electrical energy from the DC power supply to the first and second electrical coils.

The first terminal of the DC power supply may be permanently connected to the common electrical connection of the haptic feedback device.

The aerosol-generating device may comprise a common electrical switch connected to the first terminal of the DC power supply and the common electrical connection, wherein the controller is configured to close the common electrical switch when the haptic feedback device is activated. The common electrical switch is preferably a power semiconductor device.

The controller may be configured to alternate an electrical connection of the second terminal of the DC power supply to each of the first electrical connection and the third electrical connection to induce the reciprocating movement of the magnet within the first and second electrical coils. Alternating the electrical connection of the second terminal to each of the first and third electrical connections may provide a simple and convenient arrangement for alternating the supply of electrical energy from the DC power supply to each of the first and second electrical coils.

The aerosol-generating device may comprise a first electrical switch connected to the first terminal of the DC power supply and the first electrical connection, and a second electrical switch connected to the first terminal of the DC power supply and the third electrical connection, wherein the controller is configured to alternately close and open the first and second electrical switches to alternate the supply of electrical energy from the DC power supply to the first and second electrical coils. Each of the first and second electrical switches is preferably a power semiconductor device.

In preferred embodiments, the at least one power supply is a battery. For example, the at least one power supply may be a nickel-metal hydride battery, a nickel cadmium battery, or a lithium based battery, for example a lithium-cobalt, a lithium-iron-phosphate or a lithium-polymer battery. The at least one power supply may alternatively be another form of charge storage device such as a capacitor. The at least one power supply may require recharging and may have a capacity that allows for the storage of enough energy for use of the aerosol-generating device with one or more aerosol-forming substrates.

The controller is preferably configured to alternate the supply of electrical energy from the at least one power supply to the first electrical coil and the second electrical coil at a frequency of at least about 20 Hz, more preferably at least about 50 Hz, more preferably at least about 75 Hz, more preferably at least about 100 Hz. The controller is preferably configured to alternate the supply of electrical energy from the at least one power supply to the first electrical coil and the second electrical coil at a frequency of less than about 250 Hz, more preferably less than about 200 Hz. Preferably, the controller is configured to alternate the supply of electrical energy from the at least one power supply to the first electrical coil and the second electrical coil at a frequency of between about 20 Hz and about 250 Hz, more preferably between about 50 Hz and about 200 Hz.

The controller may be configured to vary the supply of electrical energy from the at least one power supply to each of the first and second electrical coils according to an amplitude modulation so that the distance through which the magnet reciprocates within the first and second electrical coils varies in proportion to the amplitude modulation.

The controller may be configured to vary the frequency at which the supply of electrical energy from the at least one power supply is alternated between the first and second electrical coils according to a frequency modulation so that the frequency at which the magnet reciprocates within the first and second electrical coils varies in proportion to the frequency modulation.

The magnet may be formed from any suitable magnetic material. The magnet may comprise at least one of iron, nickel, and neodymium. Preferably, the magnet comprises neodymium. Most preferably, the magnet comprises an alloy of neodymium, iron and boron.

The magnet may be configured for movement along a first direction in the first and second electrical coils, wherein the magnet has a length in the first direction of at least about 1 millimetre, preferably at least about 2 millimetres. The magnet may have a length in the first direction of less than about 5 millimetres, preferably less than about 4 millimetres. The magnet may have a length in the first direction of between about 1 millimetre and about 5 millimetres, preferably between about 2 millimetres and about 4 millimetres.

The magnet may have a mass of at least about 30 milligrams, preferably at least about 40 milligrams. The magnet may have a mass of less than about 70 milligrams, preferably less than about 60 milligrams. Preferably, the magnet has a mass of about 50 milligrams.

The electric heater may comprise at least one of a resistive heater and an inductive heater.

Preferably, the aerosol-generating device is portable. The aerosol-generating device may have a size comparable to a conventional cigar or cigarette. The aerosol-generating device may have a total length between approximately 30 mm and approximately 150 mm. The aerosol-generating device may have an external diameter between approximately 5 mm and approximately 30 mm.

According to a second aspect of the present invention there is provided an aerosol-generating system comprising an aerosol-forming substrate and an aerosol-generating device according to the first aspect of the present invention, in accordance with any of the embodiments described above.

The electric heater may indirectly heat the aerosol-forming substrate. The electric heater may be an inductive heater and the aerosol-generating system may further comprise a susceptor in thermal communication with the aerosol-forming substrate. During use, the susceptor is heated by the inductive heater and the aerosol-forming substrate is heated by the susceptor. The susceptor may be configured to heat the aerosol-forming substrate by at least one of conductive heat transfer, convective heat transfer, radiative heat transfer, and combinations thereof.

The aerosol-forming substrate may form part of an aerosol-generating article or an aerosol-generating cartridge that is combined with the aerosol-generating device to form the aerosol-generating system. The aerosol-generating article or the aerosol-generating cartridge may be disposable.

The aerosol-forming substrate may comprise part of the aerosol-generating device.

The aerosol-generating system may comprise a liquid storage portion and a liquid aerosol-forming substrate stored within the liquid storage portion. The liquid storage portion may form part of an aerosol-generating article, an aerosol-generating cartridge, or part of the aerosol-generating device.

During use, the electric heater heats a small portion of the liquid aerosol-forming substrate in order to vaporize the small portion of the liquid aerosol-forming substrate. The liquid aerosol-forming substrate preferably comprises a tobacco-containing material comprising volatile tobacco flavour compounds which are released from the liquid upon heating. Alternatively, or in addition, the liquid aerosol-forming substrate may comprise a non-tobacco material. The liquid aerosol-forming substrate may include water, solvents, ethanol, plant extracts and natural or artificial flavours. Preferably, the liquid aerosol-forming substrate further comprises an aerosol former.

As used herein, the term 'aerosol former' is used to describe any suitable known compound or mixture of compounds that, in use, facilitates formation of an aerosol. Suitable aerosol formers are substantially resistant to thermal degradation at the operating temperature of the aerosol-generating article. Examples of suitable aerosol formers are glycerine and propylene glycol.

The aerosol-generating system may further comprise a capillary wick in communication with the liquid storage portion. The capillary wick is arranged to be in contact with the liquid aerosol-forming substrate within the liquid storage portion. During use, liquid aerosol-forming substrate is transferred from the liquid storage portion along the capillary wick by capillary action, where it is heated by the electric heater. In embodiments in which the electric heater comprises an inductive heater, the aerosol-generating system may further comprise a susceptor. During use, the inductive heater heats the susceptor and liquid aerosol-forming substrate is transferred from the liquid storage portion to the susceptor via the capillary wick.

The aerosol-forming substrate may comprise a liquid nicotine source.

The aerosol-forming substrate may comprise a solid aerosol-forming substrate. Preferably, the solid aerosol-forming substrate may form part of an aerosol-generating article or an aerosol-generating cartridge. The aerosol-forming substrate may comprise tobacco. The aerosol-forming substrate may comprise a tobacco-containing material containing volatile tobacco flavour compounds which are released from the substrate upon heating. The aerosol-forming substrate may comprise a non-tobacco material. The aerosol-forming substrate may comprise tobacco-containing material and non-tobacco containing material.

The aerosol-forming substrate may include at least one aerosol-former. Suitable aerosol-formers include, but are not limited to: polyhydric alcohols, such as propylene glycol, triethylene glycol, 1,3-butanediol and glycerine; esters of polyhydric alcohols, such as glycerol mono-, di- or triacetate; and aliphatic esters of mono-, di- or polycarboxylic acids, such as dimethyl dodecanedioate and dimethyl tetradecanedioate

Preferred aerosol formers are polyhydric alcohols or mixtures thereof, such as propylene glycol, triethylene glycol, 1,3-butanediol and, most preferred, glycerine.

The aerosol-forming substrate may comprise a single aerosol former. Alternatively, the aerosol-forming substrate may comprise a combination of two or more aerosol formers.

The aerosol-forming substrate may have an aerosol former content of greater than 5 percent on a dry weight basis.

The aerosol-forming substrate may have an aerosol former content of between approximately 5 percent and approximately 30 percent on a dry weight basis.

The aerosol-forming substrate may have an aerosol former content of approximately 20 percent on a dry weight basis.

The aerosol-forming substrate may comprise a first aerosol-forming substrate comprising a nicotine source and a second aerosol-forming substrate comprising an acid source. Preferably, the first and second aerosol-forming substrates form part of an aerosol-generating article or an aerosol-generating cartridge. In use, the electric heater heats the first and second aerosol-forming substrates to volatilise the nicotine and the acid so that the nicotine and acid are reacted together in the gas phase to form an aerosol of nicotine salt particles.

The nicotine source may comprise one or more of nicotine, nicotine base, a nicotine salt, such as nicotine-HCI, nicotine-tartrate, or nicotine-ditartrate, or a nicotine derivative.

The nicotine source may comprise natural nicotine or synthetic nicotine.

The nicotine source may comprise pure nicotine, a solution of nicotine in an aqueous or non-aqueous solvent or a liquid tobacco extract.

The nicotine source may further comprise an electrolyte forming compound. The electrolyte forming compound may be selected from the group consisting of alkali metal hydroxides, alkali metal oxides, alkali metal salts, alkaline earth metal oxides, alkaline earth metal hydroxides and combinations thereof.

For example, the nicotine source may comprise an electrolyte forming compound selected from the group consisting of potassium hydroxide, sodium hydroxide, lithium oxide, barium oxide, potassium chloride, sodium chloride, sodium carbonate, sodium citrate, ammonium sulfate and combinations thereof.

In certain embodiments the nicotine source may comprise an aqueous solution of nicotine, nicotine base, a nicotine salt or a nicotine derivative and an electrolyte forming compound.

The nicotine source may further comprise other components including, but not limited to, natural flavours, artificial flavours and antioxidants.

The acid source may comprise an organic acid or an inorganic acid. Preferably, the acid source comprises an organic acid, more preferably a carboxylic acid, most preferably lactic acid or an alpha-keto or 2-oxo acid.

Preferably, the acid source comprises an acid selected from the group consisting of lactic acid, 3-methyl-2-oxopentanoic acid, pyruvic acid, 2-oxopentanoic acid, 4-methyl-2-oxopentanoic acid, 3-methyl-2-oxobutanoic acid, 2-oxooctanoic acid and combinations thereof. Preferably, the acid source comprises lactic acid or pyruvic acid.

The invention is further described, by way of example only, with reference to the accompanying drawings in which:
Figure 1 shows an aerosol-generating system in accordance with an embodiment of the present invention;
Figure 2 shows a first embodiment of a haptic feedback device in accordance with the present invention; and
Figure 3 shows a second embodiment of a haptic feedback device in accordance with the present invention.

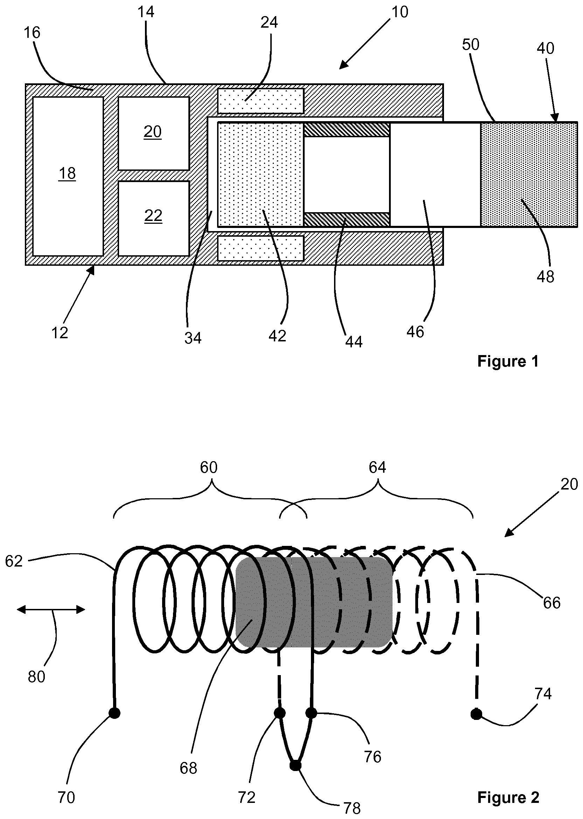

Figure 1 shows an aerosol-generating system 10 in accordance with an embodiment of the present invention. The aerosol-generating system 10 comprises an aerosol-generating device 12 comprising a housing 14 defining an internal compartment 16.

The aerosol-generating device 12 comprises a power supply 18, a haptic feedback device 20, a controller 22 and an electric heater 24, all positioned within the internal compartment 16. In use, the controller 22 controls a supply of electrical power from the power supply 18 to the haptic feedback device 20 and the electric heater 24. The electric heater 24 is an annular inductive heater.

The aerosol-generating system 10 further comprises an aerosol-generating article 40 that is received within a cavity 34 of the aerosol-generating device 12 during use. The aerosol-generating article 40 comprises an aerosol-forming substrate 42, a hollow acetate tube 44, a polymeric filter 46, a mouthpiece 48 and an outer wrapper 50. The aerosol-forming substrate 42 comprises a susceptor dispersed within a plug of tobacco and the mouthpiece 48 comprises a plug of cellulose acetate fibres.

During use, the controller 22 supplies electrical current from the power supply 18 to the electric heater 24 to inductively heat the susceptor within the aerosol-forming substrate 42. As the susceptor is heated, the tobacco within the aerosol-forming substrate 42 is heated and volatile compounds are released from the tobacco for delivery to the user. The controller 22 also supplies electrical current from the power supply 18 to the haptic feedback device 20 to provide haptic feedback to the user to indicate the start and finish of a heating cycle.

Figure 2 shows the construction of the haptic feedback device 20 in further detail. The haptic feedback device 20 comprises a first electrical coil 60 formed from a first electrical winding 62 and a second electrical coil 64 formed from a separate, second electrical winding 66. For clarity, the second electrical winding 66 is represented with a dashed line. The first and second electrical coils 60, 64 are arranged in axial alignment with each other and a magnet 68 is positioned within the first and second electrical coils 60, 64. The haptic feedback device 20 further comprises a first electrical connection 70 at a first end of the first electrical winding 62, a second electrical connection 72 at a second end of the first electrical winding 62, a third electrical connection 74 at a second end of the second electrical winding 66, and a fourth electrical connection 76 at a first end of the second electrical winding 66. A common electrical connection 78 electrically connects the second and fourth electrical connections 72, 76 to each other. During operation of the haptic feedback device 20, the controller 22 electrically connects a first terminal of the power supply 18 to the common electrical connection 78 and alternates connection of a second terminal of the power supply 18 between the first and third electrical connections 70, 74. Alternating the connection of the second terminal of the power supply 18 between the first and third electrical connections 70, 74 alternates a supply of electrical energy from the power supply 18 to the first and second electrical coils 60, 64, which alternately generates a magnetic field in each of the first and second electrical coils 60, 64. The alternately generated magnetic fields oppose each other and therefore induce a reciprocating movement of the magnet 68 along a first direction 80 and within the first and second electrical coils 60, 64.

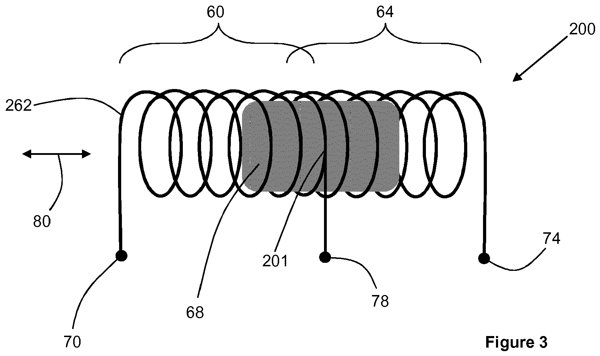

Figure 3 shows an alternative arrangement of the haptic feedback device. The alternative haptic feedback device 200 shown in Figure 3 is similar to the haptic feedback device 20 described with reference to Figure 2, and like reference numerals are used to designate like parts. Instead of the first and second electrical coils 60, 64 being formed from separate electrical windings, the haptic feedback device 200 shown in Figure 3 comprises a common electrical winding 262. The first electrical connection 70 is provided at a first end of the common electrical winding 262 and the third electrical connection 74 is provided at a second end of the common electrical winding 262. The common electrical connection 78 is directly connected to the common electrical winding 262 at an intermediate point 201 of the common electrical winding 262. The first electrical coil 60 comprises a first portion of the common electrical winding 262 between the first end of the common electrical winding 262 and the intermediate point 201 of the common electrical winding 262. The second electrical coil 64 comprises a second portion of the common electrical winding 262 between the intermediate point 201 of the common electrical winding 262 and the second end of the common electrical winding 262. The operation of the haptic feedback device 200 shown in Figure 3 is identical to the operation of the haptic feedback device 20 described with reference to Figure 2.

## Claims

1. An aerosol-generating device (12) comprising:
an electric heater (24) for heating an aerosol-forming substrate;
at least one power supply (18);
a haptic feedback device (20; 200) comprising a first electrical coil (60), a second electrical coil (64) and a magnet (68) configured for movement within the first and second electrical coils (60; 64); and
a controller (22) configured to control a supply of electrical energy from the at least one power supply (18) to the electric heater (24) and the haptic feedback device (20; 200), and wherein the controller (22) is configured to alternate the supply of electrical energy from the at least one power supply (18) to the first electrical coil (60) and the second electrical coil (64) to induce a reciprocating movement of the magnet (68) within the first and second electrical coils (60, 64).

2. An aerosol-generating device (12) according to claim 1, wherein the first electrical coil (60) comprises a first electrical winding (62) and the second electrical coil (64) comprises a second electrical winding (66) separate from the first electrical winding (62).

3. An aerosol-generating device (12) according to claim 2, wherein the haptic feedback device (20) further comprises:
a first electrical connection (70) at a first end of the first electrical winding (62);
a second electrical connection (72) at a second end of the first electrical winding (62);
a third electrical connection (74) at a second end of the second electrical winding (64); and
a fourth electrical connection (76) at a first end of the second electrical winding (64).

4. An aerosol-generating device (12) according to claim 3, wherein the second electrical connection (72) and the fourth electrical connection (76) are connected to each other by a common electrical connection (78).

5. An aerosol-generating device (12) according to claim 1, wherein the haptic feedback device (200) comprises a common electrical winding (262) having a first end and a second end, wherein the first electrical coil (60) comprises a first portion of the common electrical winding (262) extending between the first end and an intermediate part of the common electrical winding (262), and wherein the second electrical coil (64) comprises a second portion of the common electrical winding (262) extending between the intermediate part and the second end of the common electrical winding (262).

6. An aerosol-generating device (12) according to claim 5, wherein the haptic feedback device (200) further comprises:
a first electrical connection (70) at the first end of the common electrical winding (262);
a common electrical connection (78) at the intermediate part of the common electrical winding (262); and
a third electrical connection (74) at the second end of the common electrical winding.

7. An aerosol-generating device (12) according to claim 4 or 6, wherein the at least one power supply (18) comprises a DC power supply having a first terminal and a second terminal, and wherein the device (12) is configured to provide an electrical connection between the first terminal and the common electrical connection (78).

8. An aerosol-generating device (12) according to claim 7, wherein the controller (22) is configured to alternate an electrical connection of the second terminal to each of the first electrical connection (70) and the third electrical connection (74) to induce the reciprocating movement of the magnet (68) within the first and second electrical coils (60, 64).

9. An aerosol-generating device (12) according to any preceding claim, wherein the controller (22) is configured to alternate the supply of electrical energy from the at least one power supply (18) to the first electrical coil (60) and the second electrical coil (64) at a frequency of between 20 Hz and 250 Hz.

10. An aerosol-generating device (12) according to any preceding claim, wherein the magnet (68) comprises at least one of iron, nickel, and neodymium.

11. An aerosol-generating device (12) according to any preceding claim, wherein the magnet (68) is configured for movement along a first direction in the first and second electrical coils (60, 64), and wherein the magnet (68) has a length of between 1 millimetre and 5 millimetres in the first direction.

12. An aerosol-generating device (12) according to any preceding claim, wherein the magnet (68) has a mass of between 30 milligrams and 70 milligrams.

13. An aerosol-generating system (10) comprising:
an aerosol-forming substrate (42); and
an aerosol-generating device (12) according to any of claims 1 to 12.

14. An aerosol-generating system (10) according to claim 13, wherein the aerosol-forming substrate (42) comprises tobacco.

15. An aerosol-generating system according to claim 13, wherein the aerosol-forming substrate (42) comprises a liquid nicotine source.

## Patentansprüche

1. Aerosolerzeugungsvorrichtung (12), aufweisend:
eine elektrische Heizvorrichtung (24) zum Erwärmen eines aerosolbildenden Substrats;
mindestens eine Stromversorgung (18);
eine haptische Feedbackvorrichtung (20; 200), die eine erste elektrische Spule (60), eine zweite elektrische Spule (64) und einen Magnet (68) aufweist, der für eine Bewegung innerhalb der ersten und zweiten elektrischen Spulen (60; 64) ausgelegt ist; und
eine Steuerung (22), die ausgelegt ist, eine Bereitstellung elektrischer Energie von der mindestens einen Stromversorgung (18) an die elektrische Heizvorrichtungsbaugruppe (24) und die haptische Feedbackvorrichtung (20; 200) zu steuern, und wobei die Steuerung (22) ausgelegt ist, die Bereitstellung elektrischer Energie von der mindestens einen Stromversorgung (18) an die erste elektrische Spule (60) und die zweite elektrische Spule (64) abzuwechseln, um eine Hin- und Herbewegung des Magneten (68) innerhalb der ersten und der zweiten elektrischen Spule (60, 64) zu induzieren.

2. Aerosolerzeugungsvorrichtung (12) nach Anspruch 1, wobei die erste elektrische Spule (60) eine erste elektrische Wicklung (62) und die zweite elektrische Spule (64) eine zweite elektrische Wicklung (66) aufweist, die von der ersten elektrischen Wicklung (62) getrennt ist.

3. Aerosolerzeugungsvorrichtung (12) nach Anspruch 2, wobei die haptische Feedbackvorrichtung (20) weiter aufweist:
eine erste elektrische Verbindung (70) an einem ersten Ende der ersten elektrischen Wicklung (62);
eine zweite elektrische Verbindung (72) an einem zweiten Ende der ersten elektrischen Wicklung (62);
eine dritte elektrische Verbindung (74) an einem zweiten Ende der zweiten elektrischen Wicklung (64); und
eine vierte elektrische Verbindung (76) an einem ersten Ende der zweiten elektrischen Wicklung (64).

4. Aerosolerzeugungsvorrichtung (12) nach Anspruch 3, wobei die zweite elektrische Verbindung (72) und die vierte elektrische Verbindung (76) durch eine gemeinsame elektrische Verbindung (78) miteinander verbunden sind.

5. Aerosolerzeugungsvorrichtung (12) nach Anspruch 1, wobei die haptische Feedbackvorrichtung (200) eine gemeinsame elektrische Wicklung (262) mit einem ersten Ende und einem zweiten Ende aufweist, wobei die erste elektrische Spule (60) einen ersten Abschnitt der gemeinsamen elektrischen Wicklung (262) aufweist, der sich zwischen dem ersten Ende und einem Zwischenteil der gemeinsamen elektrischen Wicklung (262) erstreckt, und wobei die zweite elektrische Spule (64) einen zweiten Abschnitt der gemeinsamen elektrischen Wicklung (262) aufweist, der sich zwischen dem Zwischenteil und dem zweiten Ende der gemeinsamen elektrischen Wicklung (262) erstreckt.

6. Aerosolerzeugungsvorrichtung (12) nach Anspruch 5, wobei die haptische Feedbackvorrichtung (200) weiter aufweist:
eine erste elektrische Verbindung (70) am ersten Ende der gemeinsamen elektrischen Wicklung (262);
eine gemeinsame elektrische Verbindung (78) am Zwischenteil der gemeinsamen elektrischen Wicklung (262); und
eine dritte elektrische Verbindung (74) am zweiten Ende der gemeinsamen elektrischen Wicklung.

7. Aerosolerzeugungsvorrichtung (12) nach Anspruch 4 oder 6, wobei die mindestens eine Stromversorgung (18) eine Gleichstromstromversorgung mit einem ersten Anschluss und einem zweiten Anschluss aufweist, und wobei die Vorrichtung (12) ausgelegt ist, eine elektrische Verbindung zwischen dem ersten Anschluss und der gemeinsamen elektrischen Verbindung (78) bereitzustellen.

8. Aerosolerzeugungsvorrichtung (12) nach Anspruch 7, wobei die Steuerung (22) ausgelegt ist, eine elektrische Verbindung des zweiten Anschlusses mit jeder von der ersten elektrischen Verbindung (70) und der dritten elektrischen Verbindung (74) abzuwechseln, um die Hin- und Herbewegung des Magneten (68) innerhalb der ersten und zweiten elektrischen Spulen (60, 64) zu induzieren.

9. Aerosolerzeugungsvorrichtung (12) nach einem der vorstehenden Ansprüche, wobei die Steuerung (22) ausgelegt ist, die Zufuhr elektrischer Energie von der mindestens einen Stromversorgung (18) zu der ersten elektrischen Spule (60) und der zweiten elektrischen Spule (64) bei einer Frequenz zwischen 20 Hz und 250 Hz abzuwechseln.

10. Aerosolerzeugungsvorrichtung (12) nach einem der vorstehenden Ansprüche, wobei der Magnet (68) mindestens eines von Eisen, Nickel und Neodym aufweist.

11. Aerosolerzeugungsvorrichtung (12) nach einem der vorstehenden Ansprüche, wobei der Magnet (68) für eine Bewegung entlang einer ersten Richtung in den ersten und zweiten elektrischen Spulen (60, 64) ausgelegt ist, und wobei der Magnet (68) eine Länge zwischen 1 Millimeter und 5 Millimeter in der ersten Richtung aufweist.

12. Aerosolerzeugungsvorrichtung (12) nach einem der vorstehenden Ansprüche, wobei der Magnet (68) eine Masse zwischen 30 Milligramm und 70 Milligramm aufweist.

13. Aerosolerzeugungssystem (10), aufweisend:
ein aerosolbildendes Substrat (42); und
eine Aerosolerzeugungsvorrichtung (12) nach einem der Ansprüche 1 bis 12.

14. Aerosolerzeugungssystem (10) nach Anspruch 13, wobei das aerosolbildende Substrat (42) Tabak aufweist.

15. Aerosolerzeugungssystem nach Anspruch 13, wobei das aerosolbildende Substrat (42) eine flüssige Nikotinquelle aufweist.

## Revendications

1. Dispositif de génération d'aérosol (12) comprenant :
un dispositif de chauffage électrique (24) pour chauffer un substrat formant aérosol ;
au moins une alimentation électrique (18) ;
un dispositif de rétroaction haptique (20 ; 200) comprenant une première bobine électrique (60), une deuxième bobine électrique (64) et un aimant (68) configuré pour le mouvement dans les première et deuxième bobines électriques (60 ; 64) ; et
un contrôleur (22) configuré pour contrôler une fourniture d'énergie électrique de l'au moins une alimentation électrique (18) au dispositif de chauffage électrique (24) et le dispositif de rétroaction haptique (20 ; 200), et dans lequel le contrôleur (22) est configuré pour alterner la fourniture d'énergie électrique de l'au moins une alimentation électrique (18) à la première bobine électrique (60) et la deuxième bobine électrique (64) pour induire un mouvement alternatif de l'aimant (68) dans les première et deuxième bobines électriques (60, 64).

2. Dispositif de génération d'aérosol (12) selon la revendication 1, dans lequel la première bobine électrique (60) comprend un premier enroulement électrique (62) et la deuxième bobine électrique (64) comprend une deuxième enroulement électrique (66) séparée du premier enroulement électrique (62).

3. Dispositif de génération d'aérosol (12) selon la revendication 2, dans lequel le dispositif de rétroaction haptique (20) comprend en outre :
une première connexion électrique (70) à une première extrémité du premier enroulement électrique (62) ;
une deuxième connexion électrique (72) à une deuxième extrémité du premier enroulement électrique (62) ;
une troisième connexion électrique (74) à une deuxième extrémité du deuxième enroulement électrique (64) ; et
une quatrième connexion électrique (76) à une première extrémité du deuxième enroulement électrique (64).

4. Dispositif de génération d'aérosol (12) selon la revendication 3, dans lequel la deuxième connexion électrique (72) et la quatrième connexion électrique (76) sont reliées l'une à l'autre par une connexion électrique commune (78).

5. Dispositif de génération d'aérosol (12) selon la revendication 1, dans lequel le dispositif de rétroaction haptique (200) comprend un enroulement électrique commun (262) ayant une première extrémité et une deuxième extrémité, dans lequel la première bobine électrique (60) comprend une première partie de l'enroulement électrique commun (262) s'étendant entre la première extrémité et une partie intermédiaire de l'enroulement électrique commun (262), et dans lequel la deuxième bobine électrique (64) comprend une deuxième partie de l'enroulement électrique commun (262) s'étendant entre la partie intermédiaire et la deuxième extrémité de l'enroulement enroulement électrique commun (262).

6. Dispositif de génération d'aérosol (12) selon la revendication 5, dans lequel le dispositif de rétroaction haptique (200) comprend en outre :
une première connexion électrique (70) à la première extrémité de l'enroulement électrique commun (262) ;
une connexion électrique commune (78) à la partie intermédiaire de l'enroulement électrique commun (262) ; et
une troisième connexion électrique (74) à la deuxième extrémité de l'enroulement électrique commun.

7. Dispositif de génération d'aérosol (12) selon la revendication 4 ou 6, dans lequel l'au moins une alimentation électrique (18) comprend une alimentation CC ayant une première borne et une deuxième borne, et dans lequel le dispositif (12) est configuré pour fournir une connexion électrique entre la première borne et la connexion électrique commune (78).

8. Dispositif de génération d'aérosol (12) selon la revendication 7, dans lequel le contrôleur (22) est configuré pour alterner une connexion électrique de la deuxième borne à chacune de la première connexion électrique (70) et la troisième connexion électrique (74) pour induire le mouvement alternatif de l'aimant (68) dans les première et deuxième bobines électriques (60, 64).

9. Dispositif de génération d'aérosol (12) selon l'une quelconque des revendications précédentes, dans lequel le contrôleur (22) est configuré pour alterner la fourniture d'énergie électrique de l'au moins une alimentation électrique (18) à la première bobine électrique (60) et la deuxième bobine électrique (64) à une fréquence comprise entre 20 Hz et 250 Hz.

10. Dispositif de génération d'aérosol (12) selon l'une quelconque des revendications précédentes, dans lequel l'aimant (68) comprend au moins l'un de fer, du nickel et du néodyme.

11. Dispositif de génération d'aérosol (12) selon l'une quelconque des revendications précédentes, dans lequel l'aimant (68) est configuré pour le mouvement le long d'une première direction dans les première et deuxième bobines électriques (60, 64), et dans lequel l'aimant (68) a une longueur comprise entre 1 millimètre et 5 millimètres dans la première direction.

12. Dispositif de génération d'aérosol (12) selon l'une quelconque des revendications précédentes, dans lequel l'aimant (68) a une masse d'entre 30 milligrammes et 70 milligrammes.

13. Système de génération d'aérosol (10) comprenant :
un substrat formant aérosol (42) ; et
un dispositif de génération d'aérosol (12) selon l'une quelconque des revendications 1 à 12.

14. Système de génération d'aérosol (10) selon la revendication 13, dans lequel le substrat de génération d'aérosol (42) comprend du tabac.

15. Système de génération d'aérosol selon la revendication 13, dans lequel le substrat formant aérosol (42) comprend une source de nicotine liquide.
